# EUROPÄISCHE PATENTSCHRIFT

(11) **EP 0 832 013 B1**
(45) Veröffentlichungstag und Bekanntmachung des Hinweises auf die Patenterteilung: **02.12.1998**
(21) Anmeldenummer: 96925660.1
(22) Anmeldetag: 04.07.1996
(51) Int. Cl.: B60R 21/22, B60R 22/20, B60N 2/42, B60N 2/48

(54) **VORRICHTUNG ZUR VERSTELLUNG VON PASSIVEN RÜCKHALTEKOMPONENTEN AN EINEM KRAFTFAHRZEUGSITZ**
DEVICE FOR ADJUSTING PASSIVE RESTRAINT ELEMENTS ON A MOTOR VEHICLE SEAT
DISPOSITIF POUR LE REGLAGE D'ELEMENTS DE RETENUE PASSIFS SUR UN SIEGE DE VEHICULE AUTOMOBILE

(30) Priorität: 04.07.1995 DE 19524279
(43) Veröffentlichungstag der Anmeldung: 01.04.1998
(73) Patentinhaber: PARS Passive Rückhaltesysteme GmbH, 63755 Alzenau (DE)
(72) Erfinder: BISCHOFF, Michael, D-63791 Karlstein (DE)
(74) Vertreter: Fuchs Mehler Weiss & Fritzsche
(86) Internationale Anmeldenummer: EP9602948
(87) Internationale Veröffentlichungsnummer: WO9702159

(56) Entgegenhaltungen:
- DE-A- 3 427 466
- DE-A- 4 005 598
- DE-U- 9 415 511
- US-A- 5 390 982
- PATENT ABSTRACTS OF JAPAN vol. 016, no. 068 (P-1314), 19.Februar 1992 & JP,A,03 260900 (NISSAN MOTOR CO LTD), 20.November 1991,

## Beschreibung

Die vorliegende Erfindung betrifft eine Vorrichtung zur Verstellung von passiven Rückhaltekomponenten an einem Kraftfahrzeugsitz, bei der wenigstens eine Kopfstütze in Abhängigkeit von der mittels einer Sensorik erfaßten Position des Kopfes einer auf dem Fahrzeugsitz sitzenden Person motorisch in ihrer Höhe verstellbar ist.

Eine derartige Vorrichtung, bei der darüber hinaus auch der Sicherheitsgurt selbsttätig der Sitzgröße einer auf dem Farzeugsitz sitzenden Person angepaßt wird, ist beispielsweise bekannt aus der DE-A-34 27 466.

Mit dieser Vorrichtung soll die Sicherheit der auf dem Fahrzeugsitz sitzenden Person dadurch erhöht werden, daß beispielsweise im Falle des Auffahrens eines anderen Fahrzeuges die Kopfstütze und der Sicherheitsgurt optimal in ihrer Höhe eingestellt sind, damit es möglichst nicht zu den in diesen Fällen befürchteten Schleudertraumen kommt.

In jüngerer Zeit ist im Automobilbau der Einsatz von Sidebags oder Seitenairbags im zunehmenden Maße verwirklicht worden. Diese passive Rückhaltekomporente soll die Fahrzeuginsassen bei einem seitlichen Aufprall, insbesondere vor Verletzungen des Kopfes und/oder des Thorax schützen.

Ein Konzept zur Einbindung eines Sidebags in das Sicherheitskonzept gemäß der genannten Drucksschrift ist aus dieser allerdings nicht ersichtlich.

Aus der DE-U-94 15 511.9 ist allerdings eine Kopfstütze bekannt, in der ein durch Sensorik auch seitlich aufblasbarer Airbag eingeschlossen ist; aus der US-A-5 390 982 ist eine weitere Kopfstütze bekannt, die zusammen mit einer Sicherheitsgartführung motorisch verfahrbar ist.

Daher ist es die Aufgabe der vorliegenden Erfindung, die eingangs erwähnte, aus der DE-A-34 27 466 bekannte Vorrichtung so weiterzubilden, daß die Sicherheit der Kraftfahrzeuginsassen individuell optimiert wird.

Gelöst wird diese Aufgabe dadurch, daß die Vorrichtung als weitere, von der Kopfstütze getrennte Rückhaltekomponente einen Seitenairbag aufweist, der in seiner Höhe motorisch verfahrbar ist. Zu der bekannten höhenverstellbaren Kopfstütze kommt erfindungsgemäß also mindestens ein Seitenairbag pro Kraftfahrzeugsitz zum Einsatz, der in seiner Höhe motorisch verfahrbar ist.

Der Sidebag kann so vefahren werden, daß er personenunabhängig in der richtigen Höhe gehalten wird. Dies ist insbesondere auch möglich bei sogenannten nicht-elektrifizierten Kraftfahrzeugsitzen. Unter elekrifizierten Kraftfahrzeugsitzen sind dabei solche Sitze zu verstehen, bei denen die Sitzposition, insbesondere die Sitzhöhe mittels elektrischer Stellmotoren der jeweiligen Körper- bzw. Sitzgröße der auf dem Sitz sitzenden Person entsprechend eingestellt wird. Ist ein Kraftfahrzeug hingegen mit der erfindungsgemäßen Vorrichtung ausgestattet, wird nicht die auf dem Fahrzeugsitz sitzende Person durch Stellmotoren verfahren, sondern die passiven Rückhaltekomponenten werden in ihrer Position verändert, um sich an die im Sitz sitzende Person anzupassen.

Gemäß einer vorteilhaften Weiterbildung ist vorgesehen, daß die obere Umlenkrolle eines dem Kraftfahrzeugsitz zugeordneten Sicherheitsgurtes als noch weitere Rückhaltekomponente in ihrer Höhe motorisch verfahrbar ist. Dieses Merkmal ist zwar per se aus der eingangs erwähnten Druckschrift bekannt, nicht jedoch in Verbindung mit einem höhenverfahrbaren Seitenairbag als Rückhaltekomponente. Durch die Weiterbildung wird die Verletzungsgefahr der Kraftfahrzeuginsassen noch weiter reduziert, da insofern die bekannten Vorteile eines Sicherheitsgurtes durchgreifen.

Die Sensorik erfaßt bei der Vorrichtung also die Position des Kopfes oder der Schultern der Person, die auf dem mit der Vorrichtung ausgestatteten Fahrzeugsitz sitzt. Sie erzeugt ein Signal, welches durch eine Auswerteschaltung dahingehend ausgewertet wird, daß ein Steuersignal zur Verfügung gestellt wird, welches die optimalen Höhen für die Kopfstütze und den Seitenairbag und gegebenenfalls für die obere Umlenkrolle eines Sicherheitsgurtes repräsentiert.

Die Vorrichtung wird vorteilhaft dadurch weitergebildet, daß alle weiteren Rückhaltekomponenten betrieblich mit der Kopfstütze gekoppelt sind, und zwar so, daß sie mit einer Höhenverstellung der Kopfstütze ebenfalls in ihrer Höhe verstellt werden. Dies ermöglicht es, durch einen einmaligen Einstellvorgang, nachdem sich eine Person auf den jeweiligen Fahrzeugsitz gesetzt hat, die passiven Rückhaltekomponenten optimal auf die Person einzustellen. Die Vorrichtung gemäß dieser Weiterbildung wird also so ausgestattet, daß zunächst die Sensorik die Kopfhöhe der im Sitz sitzenden Person ermittelt, die Auswerteschaltung aus dem Signal der Sensorik ein Ansteuersignal generiert, welches die Stellglieder für die Rückhaltekomponenten aktiviert, so daß alle Komponenten zeitgleich oder nacheinander auf ihre optimale Höhe verfahren werden.

Besonders bevorzugt wird eine Ausführungsform, gemäß der alle verstellbaren Komponenten über einen Antriebsstrang von einem von der Sensorik angesteuerten Motor antreibbar sind. Hier ist der apparative und konstruktive Aufwand besonders klein gehalten. Die Komponenten stehen beispielsweise über Riemen mit dem Motor in Verbindung, gegebenenfalls auch über Zahnräder, so daß die Hübe der Einzelkomponenten nicht notwendigerweise im Verhältnis 1:1 stehen.

Diese vorteilhafte Weiterbildung eignet sich besonders für den Einbau in einen Integralsitz, was unabhängig davon als weitere vorteilhafte Weiterbildung angesehen wird.

In anderen Ausführungsformen kann die obere Umlenkrolle eines Sicherheitsgurtes beispielsweise in der C- oder B-Säule des Fahrzeugs verfahrbar gelagert sein, ebenso wie beispielsweise der Seitenairbag.

Der Sensorik kommt bei der erfindungsgemäßen Vorrichtung eine besondere Bedeutung zu. Hierzu wird vorgeschlagen, daß sie gemäß einer Ausführungsform einen kapazitiven Sensor zur Erfassung der Kopfposition aufweist. Zwischen den Platten des kapazitiven Kondensators bildet sich nach Anlegen einer Spannung ein elektrisches Feld aus. Die Kondensatorplatten sind dabei im Bereich der möglichen Kopfhöhen angeordnet. Setzt sich nun eine Person auf den betreffenden Sitz, so wird das elektrische Feld durch den Kopf der Person beeinflußt, woraus nach empirisch ermittelten Relationen auf die tatsächliche Kopfhöhe geschlossen wird und wonach dementsprechend der oder die elektrischen Motoren für die einzelnen Rückhaltekomponenten angesteuert werden.

Alternativ oder ergänzend kann vorgesehen sein, daß die Sensorik einen Infrarotsensor und -emfänger zur Erfassung der Kopf- oder Schulterposition aufweist. Diese Ausführungsform kann ergänzend oder alleine dafür verwendet werden, die Kopfposition zu ermitteln, indem der Infrarotsender einen Infrarotstrahl in Richtung des Kopfes der im Sitz sitzenden Person richtet und aus dem reflektierten empfangenen Signal auf die Kopfhöhe geschlossen wird. Sender und Empfänger sitzen dabei vor der Person. Die Erfassung läuft also von vorne ab.

Ebenfalls von vorne ablaufen kann eine Kopfhöhenerfassung durch eine digitale Bildverarbeitung, welche voraussetzt, daß der Sensor gemäß einer vorteilhaften Weiterbildung einen CCD-Sensor mit Auswerteelektronik aufweist.

Die Erfindung wird anhand eines Ausführungsbeispiel kurz näher erläutert.

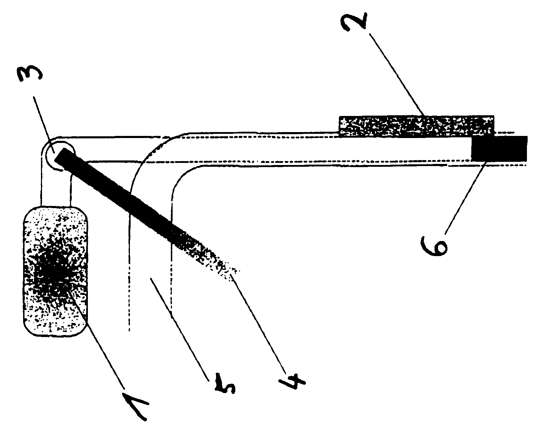

Die einzige Zeichnungsfigur zeigt schematisch einen Kraftfahrzeugsitz 5, hier angedeutet durch den Sitzrahmen.

In Kopfhöhe angeordnet ist eine Kopfstütze 1. Der Sitz ist mit einem Sicherheitsgurt 4 versehen, welcher über eine obere Umlenkrolle 3 mit der Gurtrolle (nicht dargestellt) verbunden ist. Seitlich geschützt ist eine auf dem Sitz 5 sitzende Person durch einen Seitenairbag 2, der im Thorax- und/oder Kopfbereich der auf dem Sitz sitzenden Person angeordnet ist.

Kopfstütze 1, obere Umlenkrolle 3 des Sicherheitsgurtes 4 sowie der Seitenairbag 2 sind über einen Antriebsstrang (nicht dargestellt) mit einem elektrischen Motor verbunden, durch welchen sie in ihrer Höhe verstellbar sind.

Der Motor erhält sein Steuersignal von einer Auswerteschaltung (nicht dargestellt), die ihrerseits von einer Sensorik mit einem Signal versorgt wird, welches die ermittelte Position des Kopfes der auf dem Fahrzeugsitz 5 sitzenden Person repräsentiert. Entsprechend der Auswertung werden die Kopfstütze 1, die obere Umlenkrolle 3 und der Seitenairbag 2 in ihrer jeweiligen Höhe verfahren, so daß sie individuell für jede Person auf die optimale Höhe verfahren, um im Falle eines Unfalls die Verletzungsgefahr für die Person zu reduzieren.

Gegebenenfalls können die Sensorik und die Auswerteschaltung eine bauliche Einheit bilden.

## Patentansprüche

1. Vorrichtung zur Verstellung von passiven Rückhaltekomponenten an einem Kraftfahrzeugsitz (5), bei der wenigstens eine Kopfstütze (1) in Abhängigkeit von der mittels einer Sensorik erfaßten Position des Kopfes einer auf dem Fahrzeugsitz (5) sitzenden Person motorisch in ihrer Höhe verstellbar ist,
dadurch gekennzeichnet,
daß sie als weitere, von der Kopfstütze (1) getrennte Rückhaltekomponente einen Seitenairbag (2) aufweist, der in seiner Höhe motorisch verfahrbar ist.

2. Vorrichtung nach Anspruch 1, dadurch gekennzeichnet, daß die obere Umlenkrolle (3) eines dem Kraftfahrzeugsitz (5) zugeordneten Sicherheitsgurtes (4) als noch weitere Rückhaltekomponente in ihrer Höhe motorisch verfahrbar ist.

3. Vorrichtung nach Anspruch 1 oder 2, dadurch gekennzeichnet, daß die weiteren Rückhaltekomponenten (2, 3) betrieblich mit der Kopfstütze (1) gekoppelt sind, derart, daß sie mit einer Höhenverstellung der Kopfstütze (1) in ihrer Position verstellt werden.

4. Vorrichtung nach Anspruch 3, dadurch gekennzeichnet, daß alle verstellbaren Rückhaltekomponenten (1, 2, 3) über einen Antriebsstrang von einem von der Sensorik angesteuerten Motor (6) antreibbar sind.

5. Vorrichtung nach einem der Ansprüche 1 bis 4, dadurch gekennzeichnet, daß sie in einem als Integralsitz ausgebildeten Fahrzeugsitz (5) angeordnet ist.

6. Vorrichtung nach einem der Ansprüche 1 bis 5, dadurch gekennzeichnet, daß die Sensorik eine kapazitiven Sensor zur Erfassung der Kopfposition aufweist.

7. Vorrichtung nach einem der Ansprüche 1 bis 6, dadurch gekennzeichnet, daß die Sensorik einen Infrarotsensor und -emfänger zur Erfassung der Kopfposition aufweist.

8. Vorrichtung nach einem der Ansprüche 1 bis 7, dadurch gekennzeichnet, daß die Sensorik einen CCD-Sensor mit Auswerteelektronik zur Erfassung der Kopfposition aufweist.

## Claims

1. Device for adjusting passive restraint elements on a vehicle seat (5), in which the height of at least one head rest (1) can be adjusted by motor as a function of the position of the head of a person sitting on the vehicle seat (5) recorded by means of a sensor system, characterised in that it has a side airbag (2) as a further restraint element separate from the head rest (1), the height of which can be moved by motor.

2. Device according to claim 1, characterised in that the height of the upper deflecting roller (3) of a safety belt (4) assigned to the vehicle seat (5) can be moved by motor as a still further restraint element.

3. Device according to claim 1 or 2, characterised in that the further restraint elements (2, 3) are operatively coupled with the head rest (1), such that their position is adjusted using height adjustment of the head rest (1).

4. Device according to claim 3, characterised in that all adjustable restraint elements (1, 2, 3) can be driven via a drive string by a motor (6) controlled by the sensor system.

5. Device according to one of claims 1 to 4, characterised in that it is arranged in a vehicle seat (5) designed as an integral seat.

6. Device according to one of claims 1 to 5, characterised in that the sensor system has a capacitive sensor for recording the head position.

7. Device according to one of claims 1 to 6, characterised in that the sensor system has an infrared sensor and infrared receiver for recording the head position.

8. Device according to one of claims 1 to 7, characterised in that the sensor system has a CCD sensor with evaluation electronics for recording the head position.

## Revendications

1. Dispositif pour le réglage d'éléments de retenue passifs sur un siège de véhicule automobile (5), pour lequel au moins un appui-tête (1) est réglable en hauteur de façon motorisée en fonction de la position, appréhendée au moyen d'une sensorique, de la tête d'une personne siégeant sur le siège de véhicule (5), caractérisé en ce quil présente, à titre d'autre élément de retenue, séparé de l'appui-tête (1), un sac à air latéral (2) qui est déplaçable en hauteur de façon motorisée.

2. Dispositif selon la revendication 1, caractérisé en ce que le rouleau de renvoi supérieur (3) d'une ceinture de sécurité (4) associée au siège de véhicule (5) est déplaçable en hauteur de façon motorisée à titre encore d'autre élément de retenue.

3. Dispositif selon la revendication 1 ou 2, caractérisé en ce que les autres éléments de retenue (2, 3) sont couplés fonctionnellement à l'appui-tête (1), de manière qu'ils soient réglés en position par un réglage en hauteur de l'appui-tête (1).

4. Dispositif selon la revendication 3, caractérisé en ce que tous les éléments de retenue (1, 2, 3) réglables sont susceptibles d'être entraînés par l'intermédiaire d'un tronçon d'entraînement d'un moteur (6) dont la commande est attaquée par la sensorique.

5. Dispositif selon l'une des revendications 1 à 4, caractérisé en ce qu'il est disposé dans un siège de véhicule (5) réalisé sous forme de siège intégral.

6. Dispositif selon l'une des revendications 1 à 5, caractérisé en ce que la sensorique présente un carteur capacitif, destiné à appréhender la position de la tête.

7. Dispositif selon l'une des revendications 1 à 6, caractérisé en ce que la sensorique présente un capteur et un récepteur infrarouge, en vue d'appréhender la position de la tête.

8. Dispositif selon l'une des revendications 1 à 7, caractérisé en ce que la sensorique présence un capteur CCD équipé d'une électronique d'évaluation, pour appréhender la position de la tête.
